# EUROPEAN PATENT APPLICATION

(11) **EP 4 155 276 A1**
(43) Date of publication of application: **29.03.2023**
(21) Application number: 22197082.5
(22) Date of filing: 22.09.2022
(51) Int. Cl.: C02F 9/00, C02F 1/28, C02F 1/32, C02F 1/42, C02F 1/44, C02F 103/32, C02F 101/10, C02F 101/32, C02F 101/16

(54) **METHOD TO REMOVE SALTS AND/OR IONS, IN PARTICULAR SODIUM, FROM DRAIN WATER AND WASTEWATER**

(30) Priority: 23.09.2021 NL 2029235
(71) Applicant: Triqua International B.V., 6716 BX Ede (NL)
(72) Inventor: de Bruijn, Carolus Wilhelmus Maria, Ede (NL); Duine, Arnaud Marinus Aart, Ede (NL)
(74) Representative: Arnold & Siedsma

(57) **Abstract**

The present invention relates to a method for the treatment of drain water from green houses or industrial or process waste water, the method comprising:
a) removing organic material from the water to obtain pre-treated water;
b) removing bivalent ions, in particular positively charged bivalent ions, from the pre-treated water to obtain a first permeate;
c) removing cations from the first permeate to obtain a second and optionally third and fourth permeate;
d) optionally returning the second and optional third and fourth permeate to the greenhouse or industrial process.

## Description

The present invention relates to a method to remove salts and/or ions, in particular sodium, from drain water and wastewater.

In greenhouses water is used to irrigate plants. The drain water that remains after irrigation contains sodium (Na). Since plants do not need and use Na it accumulates in the water phase when reusing the drain water for irrigation purposes. When the Na level in the irrigation water reaches levels of 4 -5 mmol (depending on crop type) it cannot be used again and should be removed as waste. This is usually done by discharging the drain water into the sewer or a water body nearby. However, it is expected that legislation will either lead to charges for discharging the drain water in the sewer or that discharge will be forbidden altogether.

Moreover, the drain water also contains high levels of useful nutrients, such as nitrogen (N) in the form of nitrate (NO₃⁻), phosphor (P) in the form of phosphates (PO₄²⁻, HPO₄⁻) and potassium (K) but also unwanted compounds such as pesticides. Therefore, nowadays legislation prohibits the discharge of drain water without treatment. However, the presently used treatment methods remove N, P and K thus destroying the economic value of these nutrients and only concentrate the mineral elements into a waste stream. The concentrate has a negative value and makes up to 20 % of the drain water volume.

Wastewater, in particular industrial and process wastewater, may also comprise high levels of particular ions that need to be removed before the water can be used again or discharged.

It is an object of the present invention to provide a method for removing salts and ions, in particular sodium, from drain water and wastewater and reclaiming the valuable nutrients.

In one embodiment, this is achieved by a method for the treatment of drain water from green houses or industrial or process wastewater, the method comprising:
a) removing organic material from the water to obtain pre-treated water;
b) removing bivalent ions, in particular positively charged bivalent ions, from the pre-treated water to obtain a first permeate;
c) removing cations from the first permeate to obtain a second and optionally third and fourth permeate;
d) optionally returning the second and optional third and fourth permeate to the greenhouse or industrial process.

The drain water usually comprises organic material, in particular biofouling. Biofouling comprises microorganisms, plants, algae, or small animals. This needs to be removed from the water since they may interfere with the other steps of the process. Removing organic material, such as biofouling from the water is preferably performed by a filtration in combination with an activated carbon step. Instead of, or in addition to activated carbon, a biological step, in particular activated sludge, a moving bed reactor, a biofilm reactor can be used. The filter step can be selected from ultrafiltration, microfiltration and open nanofiltration, with an ultrafiltration with 30kD membrane pore size being the preferred option. In a preferred embodiment, biological techniques are combined with ultrafiltration. All these biological techniques for removing organic material can thus be combined with activated carbon, or in any other combination of techniques.

In the next step, the bivalent ions Mg²⁺ and Ca²⁺ are preferably removed by means of nanofiltration. Nanofiltration (NF) is a membrane filtration-based method that uses nanometer sized through-pores that pass through the membrane. Nanofiltration membranes have pore sizes from 1-10 nanometers, smaller than that used in microfiltration and ultrafiltration, but just larger than that in reverse osmosis. According to the invention, nanofiltration is preferably used for the molecular separation of scale-forming, hydrated divalent ions (e.g. Ca²⁺, Mg²⁺) while passing smaller hydrated monovalent ions, such as Na⁺ and K⁺. The Ca²⁺ and Mg²⁺ ions are removed up to 95% by means of nanofiltration. In order to avoid scaling, i.e. the formation of CaCO₃ and MgCO₃, during the nanofiltration process the pH of the drain water or wastewater must be kept on a pH below about 6.5. The water passing through the nanofiltration column is called the first permeate. As an alternative, reverse osmosis (RO) can be used. With reverse osmosis all ions are removed.

The next step in the process is the removal of cations. This is performed in an ion-exchange column. Preferably, however, a multi-stage process is performed in which at least three ion-exchange columns are used. In one embodiment, the cations are removed in three separate ion-exchange columns, wherein the first ion-exchange column is for removal of remaining Mg²⁺ and Ca²⁺ ions, the second ion-exchange column is for removing potassium ions (K⁺) and the third ion-exchange column is for removing sodium ions (Na⁺). The three columns are suitably used in series, wherein the second column receives the water that has passed through the first column (second permeate) and the third column receives the water that has passed through the second column (third permeate). The fourth permeate is the water passing through the third ion-exchange column. The order of steps described above is highly preferred for an optimal result but other orders of steps would also be part of this invention.

After the water has passed through a column the ions to be removed are bound to the column and need to be released therefrom. This is done in a regeneration step in which a regeneration fluid is passed through the column. This regeneration step yields two, three or four concentrates. The first concentrate is obtained from the nanofiltration or precipitation step. The second, third and fourth concentrate are obtained after regeneration of the three ion exchange columns.

Suitably, the first and second ion-exchange columns are regenerated by means of HCl, H₂SO₄, HNO₃ or H₃PO₄ or combinations thereof, and the third ion-exchange column is regenerated with HCl, H₂SO₄, HNO_{3,} H₃PO₄ or a weak organic acid, or combinations thereof. The selection of the acids used for regeneration of the column depends on what is needed in the irrigation water of the greenhouse. These regeneration fluids can be pumped back into the system as irrigation water or process water thus lowering the total amount of wastewater. The regeneration fluid of the first and second ion-exchange column comprise Mg²⁺, Ca²⁺ and K⁺ and can thus suitably be re-used in the greenhouse where these ions are useful for the plant. The first and second ion exchange columns are suitably regenerated with nitric acid (HNO₃) to obtain potassium nitrate, which is a useful fertilizer in the greenhouse.

The regeneration fluid of the third column can be collected and reused for further regenerations after addition of fresh acids to concentrate the regeneration fluid as much as possible in order to reduce the amount of waste water. By using the regeneration fluid more than once the sodium concentration will increase and remaining water can be re-used. In one embodiment, the regeneration fluid of the third ion-exchange column, comprising Na⁺, is re-used as regeneration fluid after addition of one or more acid selected from HCl, H₂SO₄, HNO₃, H₃PO₄, weak organic acid.

The regeneration of the third column in which the Na⁺ is removed can also be done with an acid that finds a use outside the greenhouse so that instead of waste the sodium concentrate might gain some value.

By using separate columns for different ions it is possible to separate them from each other.

The method of the present invention can be used for removal of sodium from the drain water in greenhouses.

In a further embodiment, the method is suitable for industrial wastewater treatment for the removal of salts, in particular NaNO₃, KNO₃, NaCl, KCl, Na₂PO₄ and/or NaHPO₄.

In another embodiment, the method of the invention can be used for the removal of salts from process water and the reuse of the water from which these salts are removed.

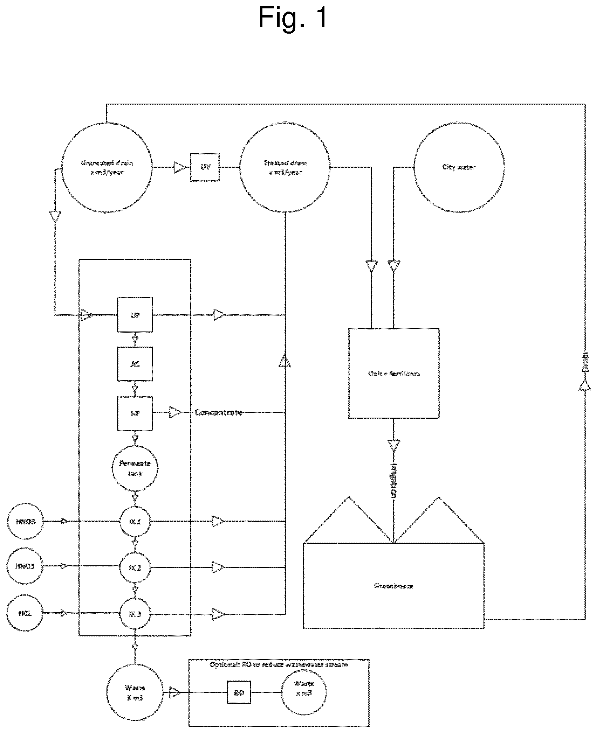

The present invention is schematically illustrated in Figure 1.

**Figure 1** shows a flow chart of an embodiment of the process and the use of the various products obtained during the process. Unprocessed drain water 1, for example from a greenhouse 2, is contacted with an ultrafiltration step 3 and active carbon 4 to remove biofouling from the drain water. In a next step, the water 5 from which the biofouling was removed is passed on to a nanofiltration step 6. Here, a concentrate 7 is obtained that contains the bivalent ions Mg²⁺ and Ca²⁺. This concentrate is returned to a treated drain water container 8 and can be used again in a fertilization unit 9 that provides irrigation water 10 to the greenhouse 2. The other flow exiting the nanofiltration unit 6 is the permeate 11. Before entering the ion exchange step, the permeate may be stored in a permeate tank 12. Subsequently, the cations are removed from the permeate 11 in a first ion exchange unit 13for removal of remaining Mg²⁺ and Ca²⁺ ions, a second ion-exchange column 14 for removing potassium ions (K⁺) and a third ion-exchange column 15 for removing sodium ions (Na⁺). Treated drain water 8 from which the monovalent cations, in particular Na⁺ and K⁺, are removed is returned to the greenhouse 2. The ion exchange units 13 and 14 are regenerated with an appropriate regeneration acid, such as HNO₃ and HCl. In further embodiments, other acids can be used. The wastewater fraction 16 which amounts to about 1% can be used in other industries. The treated drain water which amounts to about 99% of the untreated drain water that comprises useful ions from the concentrate and from the ion exchange unit is returned to the greenhouse 2. In order to further reduce the wastewater stream the wastewater fraction 16 can be further concentrated, for example in a reverse osmosis unit 17.

The invention will be further described in the following examples that are given for illustration purposes only and are in not intended to limit the invention in any way.

### EXAMPLES

### EXAMPLE 1

### Treatment of drain water

A trial has been performed on greenhouse drain water from the organic culture of tomatoes on coco substrate.

In this trial, the pretreatment to remove organic material, i.e. biofouling, was done with activated carbon. The product resulting from this step is mentioned as "clean" in the table below. This was the input for the nanofiltration. In the nanofiltration, the majority of the calcium and magnesium was separated from the rest of the stream mentioned as "concentrate" in the table. This concentrate can be transported back into the treated drain tank. The permeate of the nanofiltration unit was mentioned as "nanofiltration-1", etc.

The remaining stream was subsequently treated in three ion-exchange columns. The final result of clean water mentioned as "permeate" in the table can also be transported back to the treated drain tank.

After saturation of the ion-exchange columns they were regenerated with nitric acid (HNO₃) and hydrochloric acid (HCl). After regeneration, the first stream can be transported back to the clean drain tank as a mix of Ca(NO₃)₂ + Mg(NO₃)₂ + KNO₃ + HNO₃. The second stream can be collected separately as a mix of NaCl + HCl.

**Table 1** shows the concentration of the various ions in the different streams in the process.

**Table 1**

| **number** | **type of sample** | **potassium (K)** | **sodium (Na)** | **calcium (Ca)** | **magnesium (Mg)** |
|---|---|---|---|---|---|
| **measurement 1** | | mg/L | mg/L | mg/L | mg/L |
| **1** | clean-1 | 85.8 | 96.6 | 404 | 134.4 |
| **2** | nanofiltration-1 | 93.6 | 101.2 | 92 | 9.6 |
| **3** | concentrate-1 | 81.9 | 92.0 | 624 | 218.4 |
| **4** | permeate-1 | 3.9 | <2 | <4 | <2 |
| **measurement 2** | | mg/L | mg/L | mg/L | mg/L |
| **5** | clean-2 | 66.3 | 94.3 | 412 | 129.6 |
| **6** | nanofiltration-2 | 74.1 | 98.9 | 68 | 7.2 |
| **7** | concentrate- 2 | 62.4 | 92 | 664 | 216.0 |
| **8** | permeate-2 | 3.9 | 2.5 | <4 | <2 |
| **measurement 3** | | mg/L | mg/L | mg/L | mg/L |
| **9** | clean-3 | 54.6 | 96.6 | 428 | 129.6 |
| **10** | nanofiltration - 3 | 54.6 | 87.4 | 28 | 2.4 |
| **11** | concentrate- 3 | 58.5 | 108.1 | 704 | 216.0 |
| **12** | permeate- 3 | 3.9 | 4.6 | <4 | <2 |

### EXAMPLE 2

### Treatment of drain water #2

A second trial on in-situ treatment was performed with greenhouse drain water. The test set-up was as follows:
1. Activated carbon filtration
2. Nanofiltration
3. Three-column ion exchange unit.

The first activated carbon treatment is to remove organic particles to prevent biofouling in the nanofiltration and ion exchange unit. The nanofiltration was to remove most of the divalent ions.

The permeate of the nanofiltration unit is treated in the ion exchange unit. The ion exchange columns numbers 1 and 2 are regenerated with 2% HNO₃ solution, the third ion exchange column is regenerated with 2% HCl solution. The regeneration liquid of the third column contains NaCl, KCl and HCl and is the "waste product". The regeneration liquid of columns 1 and 2 contains Ca(NO₃)₂, Mg(NO₃)₂, KNO₃ and HNO₃ and can be used in drainwater as fertilizer.

The test was a continuous test over a period of 8 consecutive weeks. The following table shows the concentration of the various ions in the different streams in the process.

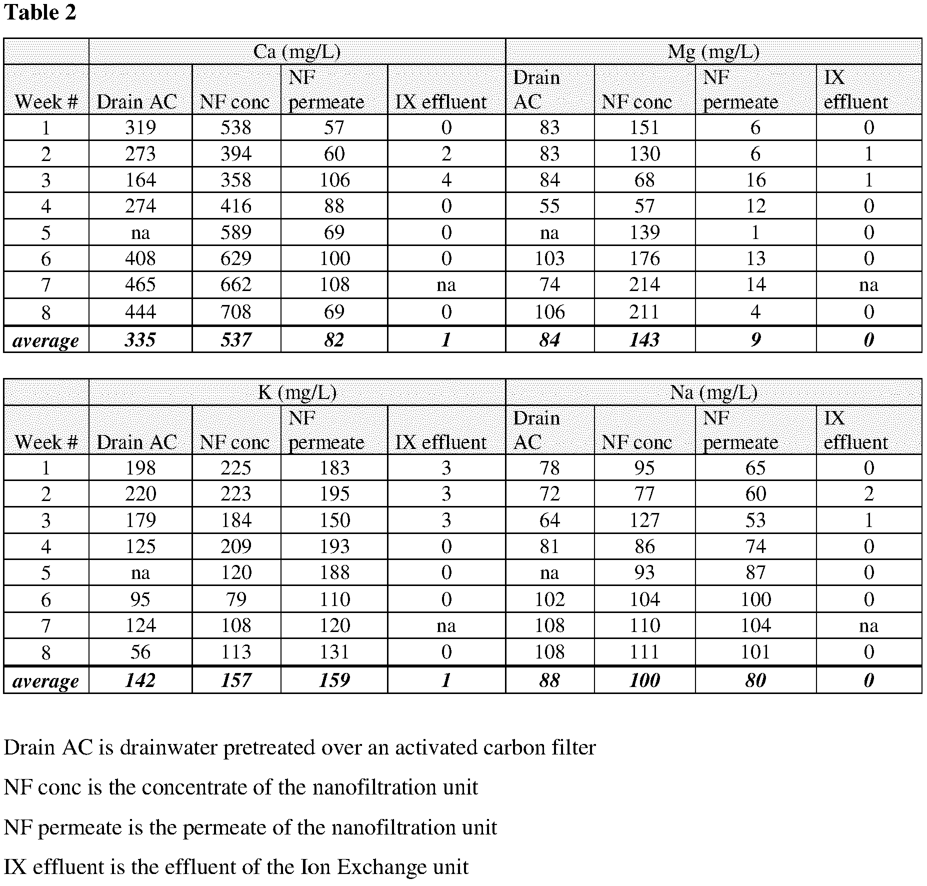

### EXAMPLE 3

### Three-column process tested on synthetic water

The three-column process was tested on synthetic process water for the removal of cations in an experimental set-up. The experiment comprised a series of batch loadings of the three-column system. The loading rate per column ranged between 296 and 436 volume/volume resin bed. Per batch the mineral composition was analysed of the ingoing water (influent IX) and the outgoing water (effluent IX). At the end of each column loading the columns were regenerated with an acid solution. Columns 1 and 2 were regenerated with a 2-5% strength nitric acid solution. The used regeneration volume of these columns was 5-5.5 volume/volume. Column 3 was regenerated with a 3-5% hydrochloric acid solution. Regeneration volume was 3 volume/volume. The regenerant of column 3 is considered waste. Per regeneration cycle the mineral composition of the regeneration solution was analysed (regenerant column 1/2/3).

The experimental data are summarized in the next table.

**Summary data experiment synthetic process water**

| **Data set (n=20)** | **Ca (mg/l)** | **Mg (mg/l)** | **K (mg/l)** | **Na (mg/l)** | **volume/volume** |
|---|---|---|---|---|---|
| IX influent | 52 | 10 | 214 | 118 | 293-463 |
| IX effluent | 0 | 0 | 0 | 0 | |
| Regenerant column 1 | 2818 | 313 | 1211 | 330 | 5-5.5 |
| Regenerant column 2 | 397 | 238 | 4148 | 1680 | 5-5.5 |
| Regenerant column 3 | 0 | 0 | 4973 | 5465 | 3 |
| Recovery of minerals | | | | | |
| % on columns 1 + 2 | 94% | 84% | 36% | 24% | |
| % in waste (calculated) | n.a. | n.a. | 64% | 76% | |

## Claims

1. Method for the treatment of drain water from green houses or industrial or process waste water, the method comprising:
a) removing organic material from the water to obtain pre-treated water;
b) removing bivalent ions, in particular positively charged bivalent ions, from the pre-treated water to obtain a first permeate;
c) removing cations from the first permeate to obtain a second and optionally third and fourth permeate;
d) optionally returning the second and optional third and fourth permeate to the greenhouse or industrial process.

2. Method as claimed in claim 1, wherein removing organic material, in particular biofouling, from the water is performed by means of a filtration step in combination with activated carbon or by means of a biological method, such as activated sludge, a moving bed reactor, a biofilm reactor or a filter, all optionally in combination with activated carbon, or combinations thereof.

3. Method as claimed in claim 1 or 2, wherein in step b) the bivalent ions Mg²⁺ and Ca²⁺ are removed by means of nanofiltration or precipitation.

4. Method as claimed in any one of the claims 1-3, wherein the removal of cations is performed in an ion-exchange column.

5. Method as claimed in claim 4, wherein the cations are removed from the water in three separate ion-exchange columns, wherein the first ion-exchange column is for removal of remaining Mg²⁺ and Ca²⁺ ions, the second ion-exchange column is for removing potassium K⁺ and the third ion-exchange column is for removing sodium Na⁺.

6. Method as claimed in claim 5, wherein after removal of the cations from the water the first and second ion-exchange columns are regenerated by means of HCl, H₂SO₄, HNO₃ or H₃PO₄ or combinations thereof, and the third ion-exchange column is regenerated with HCl, H₂SO₄, HNO_{3,} H₃PO₄ or a weak organic acid, or combinations thereof.

7. Method as claimed in claim 6, wherein after regeneration of the ion-exchange column the regeneration fluid of the first and second ion-exchange column comprising Mg²⁺, Ca²⁺ and K⁺ is re-used in the greenhouse or process.

8. Method as claimed in claim 6, wherein after regeneration of the ion-exchange column the regeneration fluid of the third ion-exchange column, comprising Na⁺ is re-used as regeneration fluid after addition of one or more acid selected from HCl, H₂SO₄, HNO₃, H₃PO₄, weak organic acid.
